# EUROPEAN PATENT APPLICATION

(11) **EP 4 696 999 A1**
(43) Date of publication of application: **18.02.2026**
(21) Application number: 24788879.5
(22) Date of filing: 02.02.2024
(51) Int. Cl.: G01M 3/32

(54) **SEALING UNIT FOR INSPECTING WATERPROOFNESS OF HALF-FINISHED PRODUCT**

(30) Priority: 14.04.2023 KR 20230049212
(71) Applicant: DMC Co., Ltd., Suwon-si Gyeonggi-do 16648 (KR)
(72) Inventor: KIM, Dong Un, Incheon 21661 (KR)
(74) Representative: Noréns Patentbyrå AB
(86) International application number: PCT/KR2024/001614
(87) International publication number: WO 2024/214935

(57) **Abstract**

The present invention relates to a sealing unit for inspecting waterproofness of a half-finished product, which is forced against surfaces and holes of a half-finished product such that a chamber space is formed in order to inspect waterproofness of the half-finished product. Particularly, the present invention relates to a sealing unit for inspecting waterproofness of a half-finished product, wherein a replaceable sealing block is used as a protrusion which is forced against a hole of a half-finished product and thus is worn in a shorter period of time, thereby preventing unnecessary waste of resources. The sealing unit for inspecting waterproofness of a half-finished product according to the present invention is forced against surfaces and holes of a half-finished product having multiple holes formed therein and having components mounted thereon such that a chamber space is formed in order to inspect waterproofness of the half-finished product. The sealing unit comprises a body and a sealing pad detachably coupled to the body. The sealing pad has a tightly-sealed portion forced against surfaces of the semi-finished product and has a protrusion forced against a hole thereof. The protrusion is a replaceable sealing block of the sealing pad.

## Description

### Technical Field

The present disclosure relates to a sealing unit for inspecting waterproofness of a semi-finished product, which comes into close contact with surfaces and holes of a semi-finished product so that a chamber space is formed in order to inspect waterproofness of the semi-finished product and, more particularly, to a sealing unit for inspecting waterproofness of a semi-finished product, wherein a replaceable sealing block is used as a protrusion portion that tightly seals a hole of a semi-finished product and thus is worn out in a shorter period of time, thereby preventing unnecessary waste of resources.

### Background Art

Portable devices like smartphones are prone to water damage because they are often used while being carried around, and because they contain electronic components that are vulnerable to water, waterproofness has become a key factor in determining the quality of portable devices, which are becoming increasingly expensive.

Given this situation, manufacturers of portable devices are focusing on ensuring a product is water resistant for everyday use, even if the product is not fully waterproof. In other words, the manufacturers are investing heavily in making devices that are water-resistant, meaning that a device is able to resist the penetration of water when the device is exposed to water for a relatively short period of time.

The applicant has proposed a device for inspecting waterproofness of a semi-finished product of a terminal having a waterproof function, as described in Korean Patent No. 10-1442072 [CHAMBER UNIT FOR CHECKING LEAK OF SEMI-FINISHED GOOD] and Korean Patent No. 10-2022328 [DEVICE FOR CHECKING LEAK OF SEMI-FINISHED GOOD].

FIG. 1 is a drawing showing the device disclosed in Korean Patent No. 10-2022328. The device is composed of: a lower body 1; an upper body 2 that is positioned above the lower body 1 and can be raised and lowered; a lower sealing pad 31 provided on the upper part of the lower body 1; and an upper sealing pad 32 provided on the lower part of the upper body 2. The lower sealing pad 31 and the upper sealing pad 32 are in close contact with the surfaces and holes of a semi-finished product H so that the holes and components of the semi-finished product H are regionally separated, thereby forming a chamber space for inspecting the waterproofness of the components.

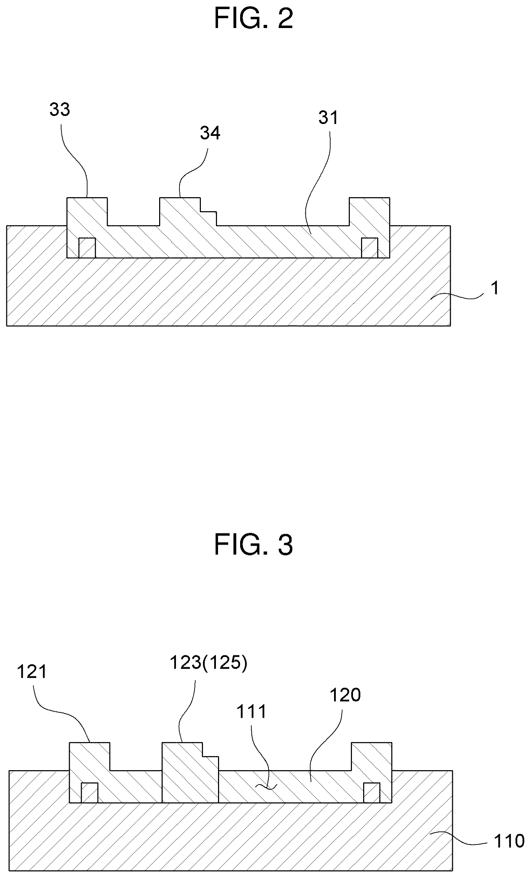

The sealing pad 31 is provided with: an adhesive portion 33 that adheres to the surface of the semi-finished product H; and a protrusion portion 34 that seals the hole of the semi-finished product H. Referring to FIG. 2, in the conventional case, the protrusion portion 34 is integral with the sealing pad 31.

In the sealing pad 31, the protrusion portion 34 that seals the hole of the semi-finished product H wears out in a shorter period of time than other parts. When the protrusion portion 34 wears out and the sealing force for the hole is reduced, the sealing pad 31 itself needs to be discarded even if there is no problem in other parts, resulting in waste of resources.

### Disclosure

### Technical Problem

The present disclosure is devised to solve the above problem that a sealing pad itself needs to be discarded when the sealing force of one protrusion portion of the sealing pad is reduced in a conventional device for inspecting waterproofness of a semi-finished product. An objective of the present disclosure is to provide a sealing unit for inspecting waterproofness of a semi-finished product that prevents waste of resources by using a replaceable sealing block as a protrusion portion of a sealing pad so that when the sealing force is reduced due to wear of the sealing block (protrusion portion), only the sealing block, not the sealing pad itself, can be replaced.

An objective of the present disclosure is to provide a sealing unit for inspecting waterproofness of a semi-finished product, in which a replaceable sealing block can be positioned in place and has excellent adhesion to a sealing pad.

### Technical Solution

In order to achieve the above-mentioned objectives, there is provided a sealing unit for inspecting waterproofness of a semi-finished product,
with the sealing unit coming into close contact with surfaces and holes of a semi-finished product so that a chamber space is formed in order to inspect waterproofness of the semi-finished product having multiple holes formed therein and having components mounted thereon.

The sealing unit includes: a body; and
a sealing pad detachably coupled to the body, and provided with an adhesive portion that adheres closely to a surface of the semi-finished product, and a protrusion portion that tightly seals a hole of the semi-finished product,
wherein the protrusion portion is a replaceable sealing block of the sealing pad.

In addition, the body is provided with a fitting projection to which the sealing block is fitted.

The sealing block is made of a material harder than that of the sealing pad.

### Advantageous Effects

A sealing unit for inspecting waterproofness of a semi-finished product according to the present disclosure is a very useful invention for industrial development since the sealing unit prevents unnecessary waste of resources by allowing a sealing pad to be continuously used by replacing only a sealing block when the sealing force is reduced due to wear of a protrusion portion (sealing block) in the sealing pad. In addition, since the sealing block is fitted into a fitting projection of a body and placed in the right position, the sealing block stably plugs a hole of a semi-finished product, and since the sealing block is made of a material harder than that of the sealing pad, the sealing block can be used for a longer period of time, and the adhesion between the sealing block and the sealing pad is excellent.

### Description of Drawings

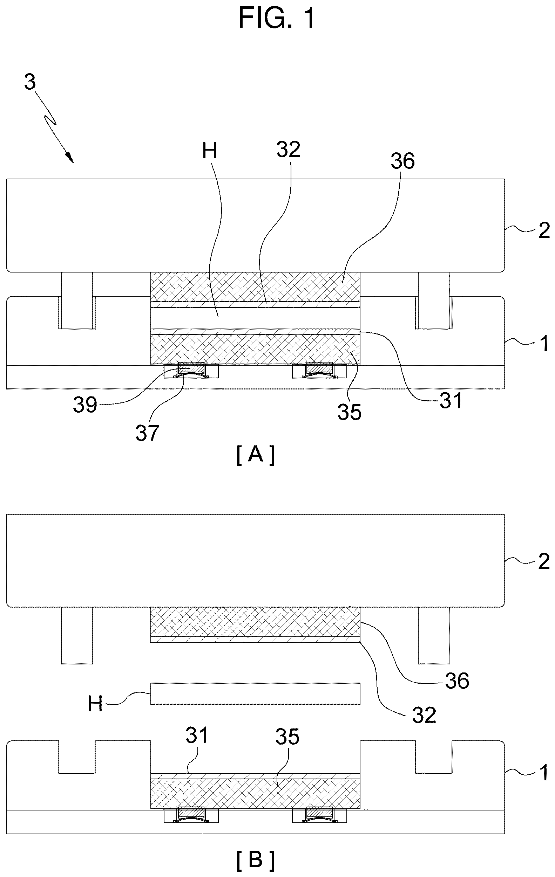

FIG. 1 is a view showing a conventional device for inspecting waterproofness of a semi-finished product.
FIG. 2 is a cross-sectional view of a conventional sealing unit for inspecting waterproofness of a semi-finished product.
FIG. 3 is a cross-sectional view of a sealing unit for inspecting waterproofness of a semi-finished product according to the present disclosure.
FIG. 4 is a cross-sectional view of a sealing unit for inspecting waterproofness of a semi-finished product according to another embodiment of the present disclosure.
FIGS. 5 and 6 are views showing an example of a sealing unit for inspecting waterproofness of a semi-finished product according to the present disclosure.

### *Description of Numerals for Major Parts of Drawings*

110: body 113: fitting projection
120: sealing pad 121: adhesive portion
123: protrusion portion 125: sealing block

### Best Mode

Hereinafter, a sealing unit for inspecting waterproofness of a semi-finished product according to the present disclosure will be described in more detail with reference to the drawings.

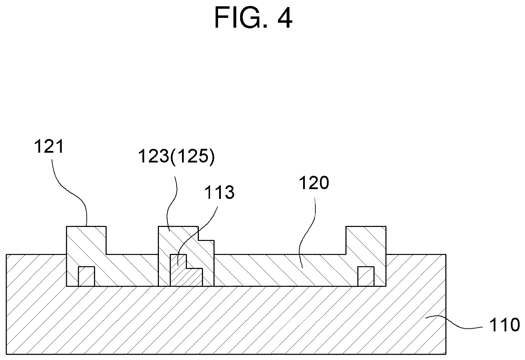

As shown in FIGS. 3 to 6, the sealing unit for inspecting waterproofness of a semi-finished product according to the present disclosure includes a body 110 and a sealing pad 120.

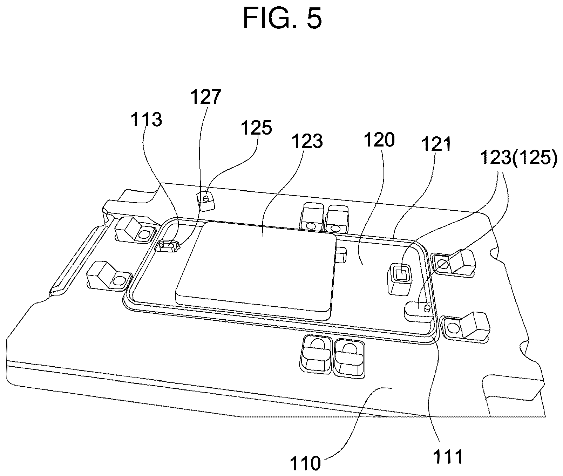

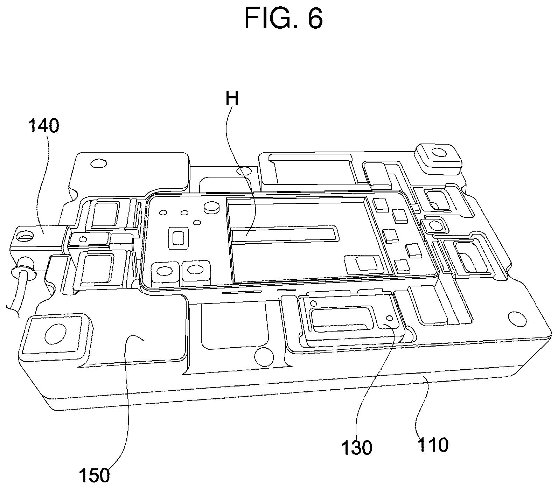

Referring to FIGS. 5 and 6, a seating groove 111 in which the sealing pad 120 is seated is formed in the central portion of the body 110, and a mounting block 150 is coupled at the edge of the body 110. On the mounting block 150, a closing block 130 that closes a hole formed on the side of a semi-finished product H is mounted so as to move forward and backward, and an air nozzle 140 that injects air into a chamber space.

The sealing pad 120 is seated in the seating groove 111 in the body 110 and is in close contact with the surface and hole of the semi-finished product H to form the chamber space for waterproofness inspection.

In this case, the chamber space is a space created as a lower sealing pad 120 provided on a lower body 110 and an upper sealing pad 120 provided on an upper body 110 seal the lower edge and upper edge of the semi-finished product H and the holes formed in the semi-finished product H, and the closing block seals the hole formed on the side of the semi-finished product H. When air is injected into the lower chamber space (or upper chamber space) based on the semi-finished product H, in case that there is a problem with waterproofing, the injected air leaks into the upper chamber space, causing a change in pressure, which is detected.

The sealing pad 120 is provided with an adhesive portion 121 that adheres closely to the surface of the semi-finished product H, and a protrusion portion 123 that tightly seals the hole of the semi-finished product H.

Referring to FIGS. 3 to 5, the adhesive portion 121 is formed integrally with the sealing pad 120 body, and the protrusion portion 123 is provided as a sealing block 125 that can be replaced as a separate configuration from the sealing pad 120 body. An assembly hole 127 is formed in the sealing pad 120 so that the sealing block 125 can be replaced. For reference, the sealing pad 120 may be provided with a plurality of protrusion portions 123, but not all of the protrusion portions 123 need to be replaceable sealing blocks 125, and only the protrusion portions 123 that are more worn than the adhesive portion 121 may be used as replaceable sealing blocks 125.

In FIG. 3, the bottom of the body 110 where the sealing block 125 is located may have a flat structure. In this case, there is a risk that the sealing block 125 may slightly deviate from the right position thereof. For this reason, a fitting projection 113 is formed protrudingly on the bottom of the body 110, and a fitting groove is formed on the lower part of the sealing block 125 to fit into the fitting projection 113, thereby preventing the sealing block 125 from moving out of the right position thereof. At this time, the fitting projection 113 may be provided on the bottom of the body 110, but also be provided on a base plate when the sealing pad 120 is composed of the base plate and a rubber plate placed thereon.

It is also necessary to seal a gap between the sealing block 125 and the sealing pad 120 body to prevent the air injected for waterproofing inspection from leaking through the gap. If the hardness of the sealing block 125 and the sealing pad 120 body is different, the gap between the sealing block 125 and the sealing pad 120 body may be more tightly sealed by the pressure of the air injected into the chamber space and the pressure exerted on the sealing block 125 and the sealing pad 120 body by the semi-finished product H as the upper body 110 and the lower body 110 come close. At this time, it is preferable to use a harder material for the sealing block 125 than the sealing pad 120 body, as this reduces wear on the sealing block 125 and allows for longer use.

Although in describing the present disclosure above, the sealing unit for inspecting waterproofness of a semi-finished product having a specific shape and structure was described with reference to the attached drawings, the present disclosure can be modified and changed in various ways by those skilled in the art, and such modifications and changes should be interpreted as falling within the scope of protection of the present disclosure.

## Claims

1. A sealing unit for inspecting waterproofness of a semi-finished product, with the sealing unit coming into close contact with surfaces and holes of a semi-finished product so that a chamber space is formed in order to inspect waterproofness of the semi-finished product having multiple holes formed therein and having components mounted thereon, the sealing unit comprising:
a body; and
a sealing pad detachably coupled to the body, and provided with an adhesive portion that adheres closely to a surface of the semi-finished product and a protrusion portion that tightly seals a hole of the semi-finished product,
wherein the protrusion portion is a replaceable sealing block of the sealing pad.

2. The sealing unit of claim 1, wherein the body is provided with a fitting projection to which the sealing block is fitted.

3. The sealing unit of claim 1, wherein the sealing block is made of a material harder than that of the sealing pad.
